# EUROPEAN PATENT APPLICATION

(11) **EP 4 553 995 A1**
(43) Date of publication of application: **14.05.2025**
(21) Application number: 24764196.2
(22) Date of filing: 28.02.2024
(51) Int. Cl.: H01M 50/609, H01M 50/673, H01M 50/70, H01M 10/44

(54) **APPARATUS FOR ELECTROLYTE IMPREGNATION OF SECONDARY BATTERY, METHOD FOR ELECTROLYTE IMPREGNATION OF SECONDARY BATTERY, AND METHOD FOR ACTIVATION OF SECONDARY BATTERY**

(30) Priority: 02.03.2023 KR 20230027833
(71) Applicant: LG Energy Solution Ltd., 07335 Seoul (KR)
(72) Inventor: NOH, Tae Gyun, Daejeon 34122 (KR); LEE, Jung Mi, Daejeon 34122 (KR); SUNG, Nak Gi, Daejeon 34122 (KR); LEE, Eui Kyung, Daejeon 34122 (KR)
(74) Representative: Goddar, Heinz J.
(86) International application number: PCT/KR2024/002573
(87) International publication number: WO 2024/181797

(57) **Abstract**

An electrolyte impregnation device of a secondary battery according to an embodiment of the present disclosure includes: a transfer part configured to transfer the secondary battery in a first direction; and a magnetic field application part for applying a magnetic field in a second direction to the secondary battery transferred by the transfer part.

A magnetic field is applied to an electrolyte flowing in a first direction, causing a magnetohydrodynamic convection flow in the electrolyte, especially a small magnetohydrodynamic convection flow near an electrode, such that, under the synergistic action of such flow force and the buoyancy force received by the bubbles, the bubbles on the surface of the electrode are moved to a gas pocket portion, thereby removing the bubbles in the electrode assembly, thereby improving the impregnation performance of the electrolyte.

## Description

### [Technical Field]

This application claims the benefit of priority to Korean Patent Application No. 10-2023-0027833, filed on March 02, 2023.

The present disclosure relates to an electrolyte impregnation device for improving the wetting performance of an electrolyte of a secondary battery, a method for impregnating an electrolyte of a secondary battery, and a method for activating a secondary battery using the device and the method.

### [Background Technology of the Invention]

A secondary battery capable of repeated charging and discharging comprises an electrode assembly, a battery case in which the electrode assembly is accommodated therein, and an electrolyte which is disposed in the battery case to activate the electrode assembly. The electrode assembly is formed by a separator interposed between a positive electrode plate formed by coating a positive electrode active material on a positive current collector and a negative electrode plate formed by coating a negative electrode active material on a negative current collector, and the electrode assembly may be made of a jelly roll type, a stack type, or the like, depending on the type of the battery case, and may be accommodated inside the battery case.

The battery case serves as an exterior material that maintains the shape of the battery and protects it from external impact, and secondary batteries can be classified into cylindrical, prismatic, and pouch types depending on the type of battery case.

A secondary battery is manufactured by having an electrode assembly accommodated in a battery case and an electrolyte injected inside the battery case. In order for the secondary battery to have a high capacity, high energy density, and long lifespan, the electrolyte should be injected inside with the designed capacity, and the electrode assembly should be completely impregnated with the electrolyte through the process of aging at a certain temperature and humidity for a certain period of time so that the electrode reaction between the electrodes can occur actively.

If the content of the electrolyte is less than the design amount, the desired electrochemical performance cannot be achieved, and the lifespan of the secondary battery is drastically reduced. In addition, if the electrode assembly is incompletely impregnated in the electrolyte, the reaction between the electrodes is not smooth, resulting in high resistance and a sharp drop in the output characteristics and capacity of the battery, which leads to decreased battery performance and shortened lifespan. In addition, the high resistance can cause the battery to be heated or explode. Therefore, injecting the accurate design amount of electrolyte and providing sufficient impregnation of the electrolyte into the electrode assembly is one of the important problems that determine the performance and lifespan of secondary batteries.

In particular, in recent years, as the demand for batteries having high energy density has increased, the loading amount of electrodes has been increasing, and as the loading amount of electrodes increases, impregnation of electrolyte on rolled electrodes can be difficult.

In order to improve the impregnation performance of the electrolyte, Patent Document 1 discloses a technique for removing bubbles in the electrolyte by vibrating the battery case, but such a method is to remove bubbles in the electrolyte by applying a physical external force to the battery, and although large-sized bubbles can be removed, rather small-sized bubbles may be generated by the application of vibration, and it is not sufficient to remove bubbles formed on the surface of the electrode.

When bubbles are present on the surface of the electrode, the bubbles hinder the impregnation of the electrolyte, so it is necessary to develop a technology to effectively remove the bubbles on the surface of the electrode to improve the impregnation performance of the electrolyte.

### [Description of the Invention]

### [Technical Problem]

The present disclosure is directed to provide an electrolyte impregnation device, method, and method for activating a secondary battery using an electrolyte impregnation device, method, and method for improving the impregnation performance of an electrolyte by effectively removing bubbles on an electrode surface.

### [Technical Solution]

An electrolyte impregnation device may comprise: a transfer part for moving a secondary battery in a first direction; and a magnetic field application part for applying a magnetic field in a second direction to the secondary battery, wherein the secondary battery may include an accommodation portion in which an electrode assembly and an electrolyte are located and a gas pocket portion disposed on a first side of the accommodation portion.

In one specific example, the second direction may be oriented such that a third direction extending from the accommodation portion to the gas pocket portion is orthogonal to a plane formed by the first direction and the second direction.

In one specific example, the transfer part may comprise a carrier having an accommodated space for storing a secondary battery; a conveyor belt for transferring the carrier; and a driving part for driving the conveyor belt in the first direction.

In one particular example, the magnetic field application part may comprise a permanent magnet or an electromagnet.

According to another embodiment of the present disclosure, there is provided a method of electrolyte impregnation of a secondary battery comprising an accommodation portion in which an electrode assembly and an electrolyte are stored; and a gas pocket portion disposed on one side of the accommodation portion. The method of impregnating the electrolyte includes: a process of transferring the secondary battery in a first direction; and a process of applying a magnetic field to the transferred secondary battery in a second direction.

In one specific example, in the process of applying the magnetic field, the second direction may be oriented such that a third direction extending from the accommodation portion to the gas pocket portion is orthogonal to a plane formed by the first direction and the second direction.

In one specific example, in the process of applying the magnetic field, the size of the magnetic field applied may be in a range of 0.1 T to 100 T.

According to another embodiment of the present disclosure, there is provided a method for activating a secondary battery comprising an accommodation portion in which an electrode assembly and an electrolyte are stored; and a gas pocket portion disposed on one side of the accommodation portion. The method of activating the secondary battery includes: a pre-aging process for causing the electrode assembly of the secondary battery to be impregnated with an electrolyte; a first charging process for charging the pre-aged secondary battery until a predetermined range of state of charge (SOC) is reached; and an aging process for aging the secondary battery, the pre-aging process comprising: a process of transferring the secondary battery in a first direction; and a process of applying a magnetic field to the transferred secondary battery in a second direction.

In one specific example, in the process of applying the magnetic field, the second direction may be oriented such that a third direction extending from the accommodation portion to the gas pocket portion is orthogonal to a plane formed by the first direction and the second direction.

In one specific example, the first charging process may be set such that a charging depth that ends charging of the secondary battery is within a range of SOC 20% to SOC 80%.

In one specific example, the first charging process may comprise a process of performing the charging while the secondary battery is under pressure.

In one specific example, the aging process may comprise: a high temperature aging process, wherein the secondary battery is aged at a temperature range of 50°C to 80°C; and a room temperature aging process, wherein the secondary battery is aged at a temperature range of 18°C to 30°C.

### [Advantageous Effects]

An electrolyte impregnation device and method according to the present disclosure, wherein a magnetic field is applied to an electrolyte flowing in a first direction, causing a magnetohydrodynamic convection flow in the electrolyte, especially a small magnetohydrodynamic convection flow near an electrode, such that, under the synergistic action of such flow force and the buoyancy force received by the bubbles, the bubbles on the surface of the electrode are moved to a gas pocket portion, thereby removing the bubbles in the electrode assembly, thereby improving the impregnation performance of the electrolyte.

The activation method according to the present disclosure can cause such magnetohydrodynamic convective flow during the pre-aging process to remove bubbles on the surface of the electrode, thereby improving the impregnation efficiency of the electrolyte, and thus shortening the time required for the pre-aging process.

### [Brief Description of the Drawings]

FIG. 1 is a block diagram to illustrate an electrolyte impregnation device for a secondary battery according to one embodiment.
FIG. 2 is an exploded perspective view of a pouch-type secondary battery according to one embodiment.
FIG. 3 is a schematic view of a pouch-type secondary battery according to one embodiment.
FIG. 4 is a drawing illustrating an electrolyte impregnation device of a secondary battery according to one embodiment.
FIG. 5 is an upper portion view of an electrolyte impregnation device of a secondary battery according to one embodiment.
FIG. 6 is a flowchart to illustrate a method of electrolyte impregnation of a secondary battery according to one embodiment.
FIG. 7 is a flowchart to illustrate a method of activating a secondary battery according to one embodiment.

### [Description of Reference Numerals]

10: secondary battery
100: electrolyte impregnation device
110: transfer part
120: magnetic field application part

### [Best Mode for Carrying out the Invention]

Hereinafter, with reference to the accompanying drawings, preferred embodiments of the present invention are described in detail to facilitate practice by one of ordinary skill in the art to which the invention belongs. However, the invention may be implemented in many different forms and is not intended to be limited or restricted by the following embodiments.

In order to clearly illustrate the present invention, detailed descriptions of extraneous parts of the description or of related prior art that would unnecessarily obscure the essence of the invention have been omitted, and when reference numerals are appended to components in the drawings, the same or similar reference numerals are used for the same or similar components throughout the specification.

In addition, the terms and words used in this specification and claims are not to be construed in their ordinary or dictionary sense, but rather in a sense and concept consistent with the technical idea of the invention, based on the principle that the inventor may define the concept of a term as he sees fit to best describe his invention.

### Electrolyte impregnation device of secondary battery

### [First embodiment]

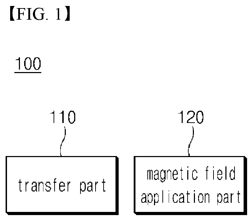

FIG. 1 is a block diagram to illustrate an electrolyte impregnation device for a secondary battery according to one embodiment.

Referring to FIG. 1, the electrolyte impregnation device 100 of the secondary battery may include a transfer part 110 configured to transfer the secondary battery in a first direction; and a magnetic field application part 120 that applies a magnetic field in a second direction to the secondary battery transferred by the transfer part. According to one embodiment of the present disclosure, the electrolyte impregnation device 100 of the secondary battery may remove bubbles on the surface of the electrode as the magnetic field formed by the magnetic field application part acts on the electrolyte of the secondary battery transferred within the magnetic field, thereby generating magnetic field induced Magnetohydrodynamics (MHD) convection in the electrolyte.

In the case of bubbles present on the surface of the electrode of the secondary battery, the bubbles hinder the wetting of the electrolyte on the electrode, but when magnetic field induced Magnetohydrodynamics convection is formed in the electrolyte, the force caused by the Magnetohydrodynamics convection acts on the bubbles and causes the bubbles to fall off the surface of the electrode, thereby ensuring better impregnation of the electrolyte on the electrode.

The transfer part 110 is not particularly limited, provided that it is capable of transferring the secondary battery in one direction. The transfer part 110 serves to transfer the secondary battery and, upon application of a magnetic field, generate a kinetic electromotive force in the electrolyte flowing in the same direction as the secondary battery.

The magnetic field application part 120 applies a magnetic field to the transferred secondary battery and generates Magnetohydrodynamics convection by interaction with the kinetic electromotive force of the electrolyte. The bubbles on the surface of the electrode are removed by the Magnetohydrodynamics convection. When a magnetic field is applied to the flowing electrolyte, the electric field and magnetic field cause Magnetohydrodynamics convection flow by Lorentzian force, and a small Magnetohydrodynamics convection flow occurs near the electrode. The small-sized bubbles can be effectively removed by the magnetohydrodynamic convection flow. In addition, the magnetic field application part may serve to increase the mean free path of the ions near the surface of the electrode, thereby increasing the amount of electric charge.

According to one embodiment of the present disclosure, the magnetic field application part 120 may comprise a permanent magnet or an electromagnet, preferably an electromagnet. The electromagnet is preferably capable of periodically changing the magnetic field direction to increase the flow in the electrolyte.

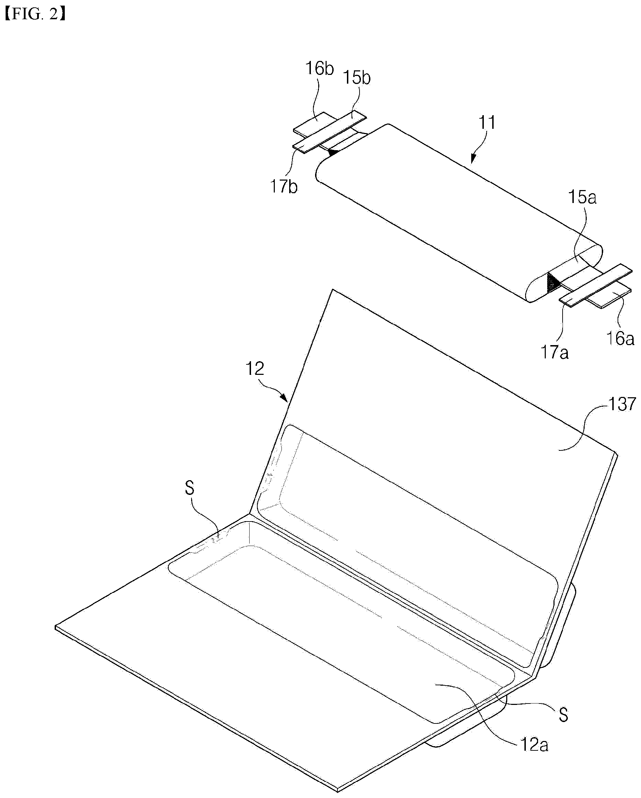

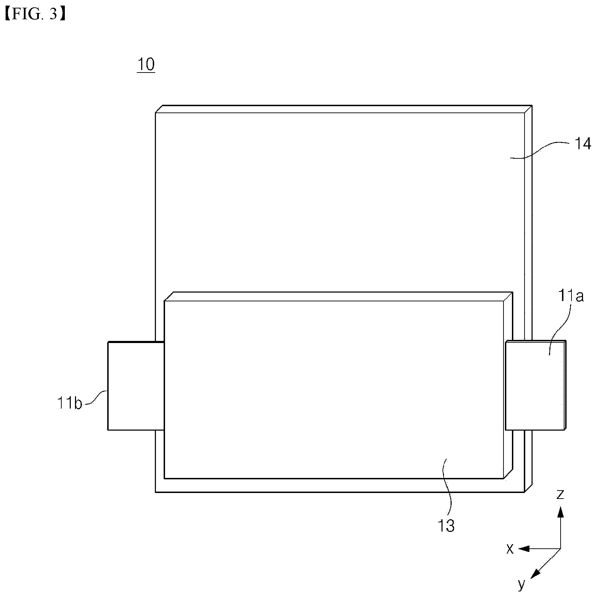

According to one embodiment of the present disclosure, the secondary battery may be a lithium secondary battery, and more specifically, may be a pouch-type secondary battery. FIG. 2 is an exploded perspective view of a pouch-type secondary battery according to one embodiment, and FIG. 3 is a schematic view of a pouch-type secondary battery according to one embodiment.

Referring to these figures, the pouch-type secondary battery 10 according to one embodiment may be in a sealed form, with the electrode assembly 11 embedded within a storage space 12a of the pouch-type battery case 12. The pouch-type secondary battery 10 according to one embodiment may comprise an accommodation portion 13 in which the electrode assembly 11 and the electrolyte (not shown) are stored, and a gas pocket portion 14 disposed on one side of the accommodation portion.

The gas pocket portion 14 of the secondary battery is a space in which gas generated in the activation process of the secondary battery is captured.

The electrode assembly 11 is formed by alternately stacking electrodes and separators. First, an electrode slurry mixed with an electrode active material, a binder, a conductive material, and a solvent is applied to a positive current collector and a negative current collector to manufacture electrodes such as a positive electrode and a negative electrode. Then, the separators are stacked between the electrodes to manufacture the electrode assembly 11. By inserting the manufactured electrode assembly 11 into the pouch-type battery case 12, injecting electrolyte into the pouch-type battery case 12, and sealing the pouch-type battery case 12, the pouch-type secondary battery 10 may be manufactured.

The electrode assembly 11 includes electrode tabs 15a, 15b. The electrode tabs 15a, 15b are connected with a positive electrode and a negative electrode of the electrode assembly 11, respectively, and protrude outwardly from the electrode assembly 11, thereby providing a path for electrons to move between the interior and the exterior of the electrode assembly 11. The electrode current collector of the electrode assembly 11 comprises a portion on which the electrode active material is applied and an end portion on which the electrode active material is not applied, in other words, an uncoated portion. And the electrode tabs 15a,15b may be formed by cutting the uncoated portion, or may be formed by connecting a separate conductive member to the uncoated portion by ultrasonic welding or the like. These electrode tabs 15a,15b may protrude in different directions of the electrode assembly 11, but may also be formed protruding toward various directions, such as, without limitation, protruding side by side in the same direction from one side.

The electrode tabs 15a,15b of the electrode assembly 11 may be connected to electrode leads 16a,16b that supply electricity to the outside of the secondary battery 10, such as by spot welding or the like. In addition, a portion of the electrode leads 16a, 16b may be surrounded by insulating portions 17a,17b. The insulating portions 17a,17b may be located confined to the side S where the upper portion and the lower portion of the battery case 12 are heat fused, so that the electrode leads 16a,16b may be bonded to the battery case 12. In addition, electricity generated from the electrode assembly 11 is prevented from flowing through the electrode leads 16a,16b to the battery case 12, and the sealing of the battery case 12 is maintained. Accordingly, these insulating portions 17a,17b are made of a non-conductive material that does not conduct electricity well. Generally, as the insulating portions 17a,17b, insulating tape that is easy to attach to the electrode leads 16a,16b and is relatively thin in thickness is often used, but various members can be used as long as the electrode leads 16a, 16b can be insulated without limited thereto.

One end of the electrode leads 16a,16b may be connected with the electrode tabs 15a, 15b and the other end may protrude to the outside of the battery case 12, respectively. In other words, the electrode leads 16a,16b may include a positive lead 16a connected with the positive tab 15a at one end and extending in the direction in which the positive tab 15a protrudes and a negative lead 16b connected with the negative tab 15b at one end and extending in the direction in which the negative tab 15b protrudes. Meanwhile, both the positive lead 16a and the negative lead 16b may protrude from the exterior of the battery case 12 at the other end. Thus, electricity generated within the interior of the electrode assembly 11 can be supplied to the exterior. Further, since the positive tab 15a and the negative tab 15b are each formed to protrude toward various directions, the positive leads 16a and the negative leads 16b may also each extend toward various directions.

According to one embodiment, the second direction may be determined so that a third direction (z-axis direction) from the accommodation portion 13 toward the gas pocket portion 14 is orthogonal to a plane formed by the first direction (x-axis direction) and the second direction (y-axis direction). Here, the first direction is a transfer direction of the secondary battery, and the second direction is an application direction of the magnetic field.

When a magnetic field is formed around the secondary battery being transferred in the first direction (x-axis direction), a kinetic electromotive force is generated in the electrolyte fluid inside the secondary battery, and the electrolyte fluid becomes charged. The charged electrolyte fluid is subjected to the force of electromotive force and magnetic field, and Magnetohydrodynamics convection is generated in the direction of Lorentz force. In view of this mechanism of generating Magnetohydrodynamics convection, it is preferable to set the second direction so that the direction of Magnetohydrodynamics convection is a third direction from the accommodation portion 13 toward the gas pocket portion 14.

In particular, bubbles in the electrolyte are subjected to buoyancy in a direction opposite to gravity, and when the direction of the buoyancy is consistent with the third direction, bubbles on the surface of the electrode 10 can be moved to the gas pocket portion 14 more effectively by the synergistic effect of Magnetohydrodynamics convection and buoyancy acting in the third direction.

### [Second embodiment]

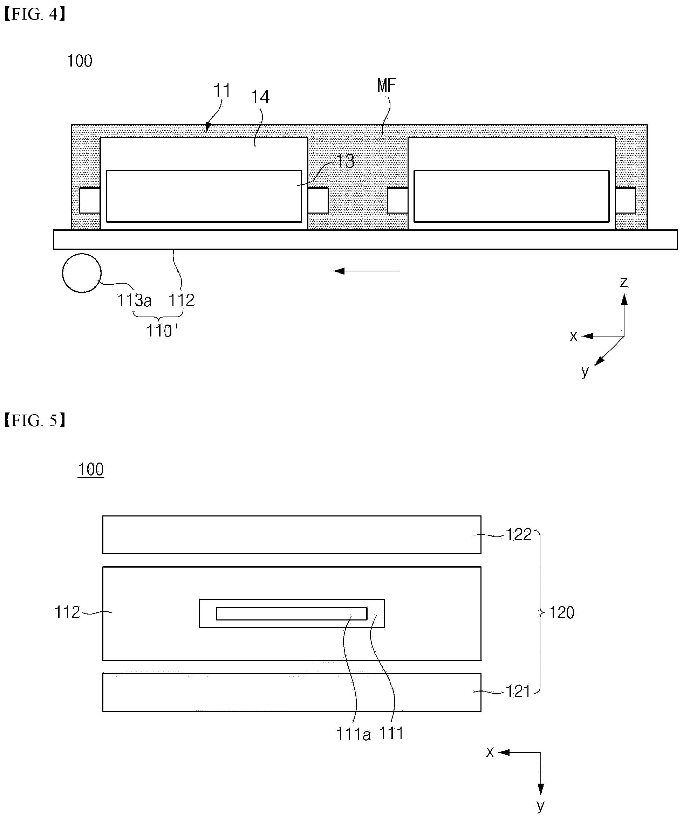

FIGS. 4 to 5 are drawings illustrating an electrolyte impregnation device of a secondary battery according to one embodiment. The transfer part 110' may be adopted as a substitute for the transfer part 100 of FIG. 1 in the electrolyte impregnation device of the secondary battery.

Referring to FIG. 4 and FIG. 5, the transfer part 110' may include a carrier 111, a conveyor belt 112, and a driving roller 113a.

The carrier 111 may comprise a storage space 111a for accommodating the secondary battery 10. The accommodating space 111a may have a volume into which the secondary battery 10 can be inserted, and as shown in FIG. 4, the carrier may be configured to allow the secondary battery 10 to be transferred in an upright state with the accommodation portion 13 of the secondary battery 10 positioned below and the gas pocket portion 14 above.

The carrier 111, configured to be transferable with the secondary battery 10 in an upright state, may maximize the area that the electrode assembly 11 and electrolyte (not shown) located within the accommodation portion 13 are exposed to the magnetic field, thereby improving the efficiency of removing bubbles.

According to a preferred embodiment, the longitudinal direction (y-axis direction) length of the storage space 111a may correspond to a thickness of the accommodation portion of the secondary battery 10, and the transverse direction (x-axis direction) length of the storage space 111a may correspond to a width direction (x-axis direction) length of the secondary battery. In addition, in order to increase the magnetic field exposure area of the electrode assembly and the electrolyte located within the accommodation portion, it is preferably configured so that the length of the secondary battery inserted into the accommodation space 111a is not long.

A conveyor belt 112 may be configured to transfer the carrier 111. The carrier 111 may be attached to an upper surface of the conveyor belt or may be configured to be removable.

The driving part 113 may be configured to drive the conveyor belt 112 in a first direction (x-axis direction). Such a driving part may include a driving roller 113a disposed in contact with the conveyor belt 112 at a downstream side of the conveyor belt 112, and a motor (not shown) that applies a rotational force to the driving roller 113a.

According to one embodiment of the present disclosure, in the electrolyte impregnation device 100 of the secondary battery, the magnetic field (MF) formed by the magnetic field application part 120 acts on the electrolyte of the secondary battery 10 transferred within the magnetic field, thereby generating magnetic field induced Magnetohydrodynamics (MHD) convection in the electrolyte. The bubbles on the surface of the electrode are moved to the gas pocket portion by such magnetohydrodynamic convection and are removed from the electrode.

Referring to FIG. 5, the magnetic field application part 120; 121,122 according to an exemplary embodiment may include a first electromagnet 121 and a second electromagnet 122 disposed at the front and rear, respectively, of the carrier 111 storing the secondary battery 10.

The electrolyte impregnation device of such a secondary battery is configured to apply a magnetic field (MF) in the second direction to the secondary battery moving in the first direction, thereby generating a Magnetohydrodynamics convection flow by Lorentzian forces in the electrolyte. Such Magnetohydrodynamics convection can move the bubbles on the surface of the electrode in the third direction, thereby effectively removing the bubbles on the surface of the electrode.

Further, by the synergistic action of the flow force of the Magnetohydrodynamics convection generated near the electrode and the buoyancy force received by the bubbles, the bubbles on the surface of the electrode can be moved to the gas pocket portion, thereby removing the bubbles in the electrode assembly, thereby improving the impregnation performance of the electrolyte.

### Electrolyte impregnation method of secondary battery

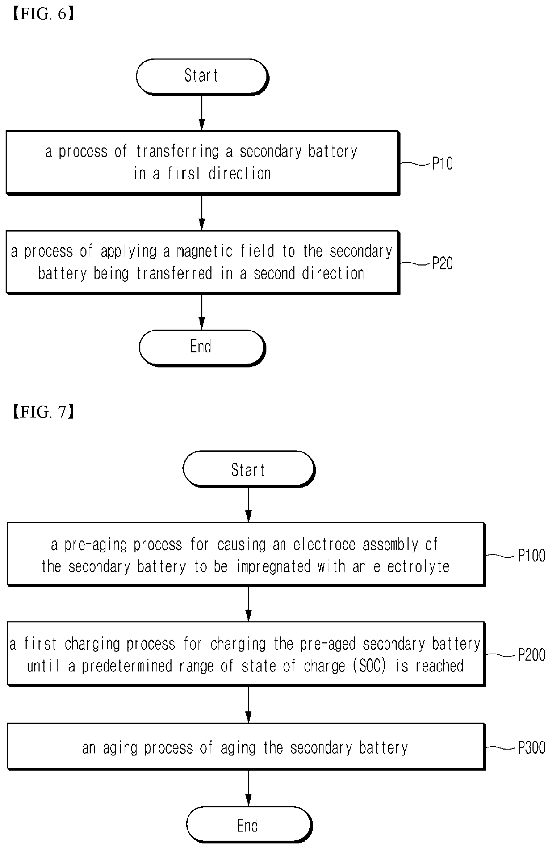

FIG. 6 is a flowchart to illustrate a method of electrolyte impregnation of a secondary battery according to one embodiment.

Referring to FIGS. 1 to 6, a method of impregnation of a secondary battery with an electrolyte may include a process P10 of transferring a secondary battery in a first direction; and a process P20 of applying a magnetic field to the secondary battery being transferred in a second direction.

Since the secondary battery has been described in detail previously, a repeated description thereof will be omitted.

Referring to FIG. 1 and FIGS. 4 to 6, the process P10 of transferring the secondary battery may be performed by the transfer parts 110,110', and the process P20 of applying the magnetic field may be performed by the magnetic field application part 120, and a repeated description thereof will be omitted.

Moreover, in determining the second direction in the process P20 of applying the magnetic field, the second direction is determined so that the third direction from the accommodation portion toward the gas pocket portion is orthogonal to the plane formed by the first direction and the second direction, as described above.

According to one embodiment of the present disclosure, the size of the magnetic field applied in the process of applying the magnetic field P20 may be in the range of 0.1T to 100T, preferably 0.1T to 50T, and more preferably 0.1T to 5T.

In such a method of impregnation of the electrolyte of the secondary battery, when a magnetic field is applied in the second direction to the electrolyte flowing in the first direction, a Magnetohydrodynamics convection flow is induced by the Lorentzian force, and a Magnetohydrodynamics convection flow is generated near the electrode, which moves the bubbles on the surface of the electrode in the third direction.

This Magnetohydrodynamics convection-induced flow force and the buoyancy received by the bubbles can synergistically work to more effectively move the bubbles on the surface of the electrode to the gas pocket portion, resulting in the removal of the bubbles in the electrode assembly, thereby improving the impregnation performance of the electrolyte.

### Activation method of secondary battery

FIG. 7 is a flowchart to illustrate a method of activating a secondary battery according to one embodiment.

Referring to FIGS. 1 to 7, a method of activating a secondary battery may comprise: a pre-aging process P100 for causing an electrode assembly of the secondary battery to be impregnated with an electrolyte; a first charging process P200 for charging the pre-aged secondary battery until a predetermined range of state of charge SOC is reached; an aging process P300 of aging the secondary battery; and the pre-aging process P100 may include a process P10 of transferring the secondary battery in a first direction; and a process P20 of applying a magnetic field in a second direction to the secondary battery transferred.

Since the secondary battery has been described in detail previously, a repeated description thereof will be omitted.

The pre-aging process P100 may be a process of waiting for the electrode assembly 11 to be sufficiently impregnated with the electrolyte in a secondary battery 10 manufactured by storing the electrode assembly 11 in the battery case 12, injecting the electrolyte, and sealing the battery case.

After the electrode assembly 11 and the electrolyte are stored in the battery case 12, in order for the electrode reaction by first charging to proceed, the electrolyte must be sufficiently impregnated with the positive electrode, negative electrode, and separator constituting the electrode assembly in advance. If the first charging process is performed while the electrolyte is not impregnated, uncharged areas may occur, resulting in the SEI film not being uniformly formed, which may result in a decline in battery performance.

Conventionally, the pre-aging process (P100) is performed by leaving the secondary battery in a constant temperature/humidity state for a predetermined period of time. As the electrolyte gradually seeps into the electrode, a chemical reaction between the electrolyte and the electrode may occur and bubbles may be generated, which hinder the impregnation of the electrolyte.

The pre-aging process according to the present disclosure, including the process P10 of transferring the electrolyte and the process P20 of applying a magnetic field, can cause Magnetohydrodynamics convection flow in the electrolyte, so that the bubbles are more effectively transferred to the gas pocket portion 14, and the bubbles on the surface of the electrode can be removed, thereby improving the efficiency of impregnation of the electrolyte and shortening the pre-aging time.

Such a pre-aging process may be to leave the secondary battery at a temperature range of 18 degrees Celsius to 27 degrees Celsius, for a period of 12 hours to 48 hours, wherein the temperature range may be from 18 degrees Celsius to 27 degrees Celsius, preferably from 19 degrees Celsius to 26 degrees Celsius, and more preferably from 20 degrees Celsius to 25 degrees Celsius. Also, the duration of the pre-aging process may be from 12 hours to 48 hours, preferably from 18 hours to 36 hours.

In the pre-aging process, a high temperature pre-aging process may be included to improve the electrolyte impregnation efficiency. Such a high temperature pre-aging process may be a process of aging the preliminary lithium secondary battery for 12 hours to 24 hours at a temperature of 40 degrees Celsius to 55 degrees Celsius.

During the pre-aging process, such a high-temperature pre-aging process may have the effect of improving the impregnation of the electrolyte, such that the SEI film may be formed more uniformly during the first charging process, and the risk of lithium precipitation may be avoided as the occurrence of unfilled areas is reduced.

During the pre-aging process, the process of transferring P10 and the process of applying a magnetic field P20 may be performed at an appropriate time during the early stage of the pre-aging process or the middle stage of the pre-aging process or the late stage of the pre-aging process, preferably at an early stage of the pre-aging process. Here, an early time of the pre-aging process may be a time within 12 hours after the manufacturing of the secondary battery.

The process of transferring P10 and the process of applying a magnetic field P20 have been described in detail previously, so that a repeated description of them will be omitted.

Further, in determining the second direction in the process of applying the magnetic field P20, the second direction is determined so that the third direction from the accommodation portion to the gas pocket portion is orthogonal to the plane formed by the first direction and the second direction, as also described above.

The first charging process P200 is a process of charging the secondary battery to a predetermined voltage. The lithium secondary battery is activated by performing an initial charge during the manufacturing process, and in such an initial charge, lithium ions from the positive electrode migrate to and are inserted into the negative electrode, wherein a solid electrolyte interface (SEI) film is formed on the surface of the negative electrode.

Once the SEI film is formed, it acts as an ion tunnel, allowing only lithium ions to pass through. The effect of this ion tunnel is to solvation the lithium ions, preventing large molecular weight organic solvent molecules, such as lithium salts, EC, DMC, or DEC, which move with the lithium ions in the electrolyte, from being inserted into the graphite negative electrode and collapsing the structure of the negative electrode. Once the SEI film is formed, the lithium ions will never again have a side reaction with the graphite negative electrode or other materials, and the amount of charge used to form the SEI film has an irreversible capacity and does not react reversibly during discharge. Thus, no further decomposition of the electrolyte occurs, and the amount of lithium ions in the electrolyte is reversibly maintained, so that stable charge and discharge can be maintained.

Consequently, once the SEI film is formed, the amount of lithium ions is reversibly maintained, and the lifespan characteristics of the battery are improved.

In one specific example, in the above first charging process P200, the charging depth that ends the charging may be set within a range of 20% (SOC 20%) to 80% (SOC 80%) of the capacity of the lithium secondary battery (SOC 100%), or may be set within a range of SOC 30% to SOC 80%, or may be set within a range of SOC 40% to SOC 80%, or may be set within a range of SOC 50% to SOC 75%. This may be appropriately selected based on the material properties, capacity, etc. of the secondary battery.

As for the charging conditions in the first charging process P200, the charging may be performed according to conditions known in the art. Specifically, the charging method may perform charging in a constant current method until the charging end voltage is reached. In this case, the charging rate (c-rate) may be 0.01C to 2C, may be 0.1C to 1.5C, may be 0.2C to 1C, may be 0.2C to 1C, but is not necessarily limited thereto, and may be appropriately changed according to the material properties of the positive electrode and the negative electrode.

In addition, the temperature condition of the first charging process P200 may be 18°C to 28°C, more particularly 19°C to 27°C, more particularly 20°C to 26°C.

Moreover, the first charging process P200 may comprise performing the charging while the secondary battery is under pressure. If the charging is performed while the secondary battery is pressurized, it has the effect of preventing gas generated during the charging process from being trapped inside the electrode assembly. And such pressurization may be performed by a pressurizing jig configured to pressurize both sides of the secondary battery.

Further, the first charging process P200 may be a one-step charging without a break until a charging depth that ends the charging is reached, or the first charging process may be divided into a plurality of steps until a set charging end voltage is reached, and the first charging process may be performed by changing the charging conditions and pressure conditions at each step.

The aging process P300 may be a process of aging the secondary battery to stabilize the SEI film formed through the first charging process P200.

According to one embodiment, the aging process P300 may include a high temperature aging process, wherein the secondary battery is aged at a temperature range of 50°C to 80°C; and a room temperature aging process, wherein the secondary battery is aged at a temperature range of 18°C to 30°C.

The high temperature aging process has the effect of further accelerating the stabilization of the SEI film formed during the first charging process.

The high temperature aging process may be performed in a temperature range of 50 degrees Celsius to 80 degrees Celsius, preferably 55 degrees Celsius to 80 degrees Celsius, more preferably 60 degrees Celsius to 75 degrees Celsius. Further, the time for performing the high temperature aging may be from 10 hours to 40 hours, preferably from 12 hours to 36 hours, more preferably from 18 hours to 30 hours.

If the set temperature during high temperature aging is excessively high or the time of performing the high temperature aging process is excessively long, the durability of the SEI film may be reduced, which is undesirable; conversely, if the set temperature during high temperature aging is excessively low or the time of performing the high temperature aging process is excessively short, the lifespan characteristics of the lithium secondary battery may be reduced.

The room temperature aging process may be a process of aging the secondary battery at a temperature range of 18°C to 30°C, for a period of 24 hours to 80 hours.

The temperature range of the room temperature aging process may be from 18 degrees Celsius to 30 degrees Celsius, preferably from 19 degrees Celsius to 27 degrees Celsius, and more preferably from 20 degrees Celsius to 25 degrees Celsius. Further, the time of performing the room temperature aging may be from 24 hours to 80 hours, preferably from 30 hours to 72 hours, and more preferably from 16 hours to 60 hours.

If the room temperature aging process is performed at an excessively low temperature outside the above range, or is performed for an excessively short time, the reserve lithium secondary battery may not be sufficiently activated, and thus the electrical performance may be degraded; conversely, if the room temperature aging process is performed at an excessively high temperature, or is performed for an excessively long time, a swelling phenomenon may occur, or the durability of the SEI film may be decreased.

Meanwhile, as for the order of the high temperature aging process and the room temperature aging process, performing the high temperature aging followed by the room temperature aging is more preferable in terms of stabilization of the SEI film.

According to one embodiment, after the above first charging process P200 and the aging process P300, the secondary battery may further include a Degas process to release gas inside the secondary battery to the outside of the secondary battery.

Although the invention is shown and described in connection with particular embodiments, it will be readily apparent to those of ordinary skill in the art that various modifications and variations are possible without departing from the spirit and scope of the invention shown in the appended claims.

## Claims

1. An electrolyte impregnation device of a secondary battery comprising:
a transfer part for moving a secondary battery in a first direction; and
a magnetic field application part for applying a magnetic field in a second direction to the secondary battery,
wherein the secondary battery includes an accommodation portion in which an electrode assembly and an electrolyte are located and a gas pocket portion disposed on a first side of the accommodation portion.

2. The electrolyte impregnation device of the secondary battery of claim 1, wherein the second direction is oriented such that a third direction extending from the accommodation portion to the gas pocket portion is orthogonal to a plane formed by the first direction and the second direction.

3. The electrolyte impregnation device of the secondary battery of claim 1, wherein the transfer part comprising:
a carrier having an accommodated space for storing a secondary battery;
a conveyor belt for transferring the carrier; and
a driving part for driving the conveyor belt in the first direction.

4. The electrolyte impregnation device of the secondary battery of claim 1, wherein the magnetic field application part comprises a permanent magnet or an electromagnet.

5. A method of electrolyte impregnation of a secondary battery comprising:
a process of transferring the secondary battery provided with an electrode assembly; an accommodation portion in which an electrode assembly and an electrolyte are stored; and a gas pocket portion disposed on one side of the accommodation portion in a first direction; and
a process of applying a magnetic field to the transferred secondary battery in a second direction.

6. The method of electrolyte impregnation of the secondary battery of claim 5, wherein in the process of applying the magnetic field, the second direction is oriented such that a third direction extending from the accommodation portion to the gas pocket portion is orthogonal to a plane formed by the first direction and the second direction.

7. The method of electrolyte impregnation of the secondary battery of claim 5, wherein in the process of applying the magnetic field, the size of the magnetic field applied is in a range of 0.1 T to 100 T.

8. A method of activating a secondary battery comprising an accommodation portion in which an electrode assembly and an electrolyte are stored; and a gas pocket portion disposed on one side of the accommodation portion, and the method of activating a secondary battery includes:
a pre-aging process for causing the electrode assembly of the secondary battery to be impregnated with an electrolyte;
a first charging process for charging the pre-aged secondary battery until a predetermined range of state of charge (SOC) is reached; and
an aging process for aging the secondary battery,
wherein the pre-aging process comprising: a process of transferring the secondary battery in a first direction; and
a process of applying a magnetic field to the transferred secondary battery in a second direction.

9. The method of activating the secondary battery of claim 8, wherein in the process of applying the magnetic field, the second direction is oriented such that a third direction extending from the accommodation portion to the gas pocket portion is orthogonal to a plane formed by the first direction and the second direction.

10. The method of activating the secondary battery of claim 8, wherein the first charging process is set such that a charging depth that ends charging of the secondary battery is within a range of SOC 20% to SOC 80%.

11. The method of activating the secondary battery of claim 8, wherein the first charging process comprises process of performing the charging while the secondary battery is under pressure.

12. The method of activating the secondary battery of claim 8, wherein the aging process comprising: a high temperature aging process, wherein the secondary battery is aged at a temperature range of 50°C to 80°C; and
a room temperature aging process, wherein the secondary battery is aged at a temperature range of 18°C to 30°C.
